# EUROPEAN PATENT SPECIFICATION

(11) **EP 3 727 865 B1**
(45) Date of publication and mention of the grant of the patent: **08.02.2023**
(21) Application number: 18811315.3
(22) Date of filing: 06.12.2018
(51) Int. Cl.: B41J 11/00, B41J 2/21

(54) **METHOD FOR CONTROLLING INKJET PRINTER**
VERFAHREN ZUR STEUERUNG EINES TINTENSTRAHLDRUCKERS
PROCÉDÉ DE COMMANDE D'IMPRIMANTE À JET D'ENCRE

(30) Priority: 20.12.2017 EP 17208786
(43) Date of publication of application: 28.10.2020
(73) Proprietor: Canon Production Printing Holding B.V., 5914 HH Venlo (NL)
(72) Inventor: AARTS, Peter J.M., 5914 CA Venlo (NL); PETERS, Dirk G., 5914 CA Venlo (NL)
(74) Representative: Canon Production Printing IP Department
(86) International application number: PCT/EP2018/083862
(87) International publication number: WO 2019/121047

(56) References cited:
- US-A1- 2006 230 969

## Description

### BACKGROUND OF THE INVENTION

### 1. Field of the invention

The invention relates to a method for controlling an inkjet printer, which comprises a reciprocating print head that applies a curable ink on a substrate in an at least two-pass print process, wherein a print mask is applied to determine which dot positions are addressed in a pass of the print head, the ink being positionally fixed in a fixing step directly after application and cured in a curing step on a part of the substrate where the application of ink is completed. The invention also relates to an inkjet printer wherein this method is applied.

### 2. Description of the Related Art

Many kinds of inkjet printers are known and many types of inks. Among them, there are inks that are applied at a low viscosity in order to obtain appropriate jetting properties. After application to a substrate the ink is solidified by irradiating the ink with electromagnetic radiation, such as ultraviolet (UV) radiation. This process is also known as curing. Depending on the time between the ink application and its curing the ink may still flow across the substrate surface, due to its low viscosity. This may lead to deterioration of the print quality, which depends on a carefully selected position dependent ink composition. It is known to partly solidify the ink immediately after application and fully cure the ink in a later stage. The first step may be performed by applying an amount of radiation that only immobilizes the ink, also known as pin-curing. Another way of positionally fixing the ink is to lower its temperature relative to its jetting temperature, thus raising its viscosity. Inks that are susceptible to this way of application are also known as gelling inks. The second step, fully curing the ink, may be postponed to a later time, when all the ink in a part of the image has been applied.

The application of ink to a substrate across which a print head reciprocates in order to render an image on the substrate is possible in a large number of ways. These are called print modes and depend on the required print quality, the type of medium that is used as a substrate, the positional accuracy of the ink dots etc. After a print head has scanned the substrate applying a swath of ink dots, the substrate and the print head are typically transported relative to each other in a sub-scanning direction, perpendicular to the swath. Multiple swaths may be applied partly upon one another to obtain a full image. A print mode defines which ink dots are applied in which swath by means of a print mask and the amount of transport in the sub-scanning direction after each swath. For example, in a so-called two-pass print mode two swaths are applied upon one another and often a transport step of half a swath width is applied between the two passes of the print head. A print mask defines which dots are applied in a first and which in a second swath. Sometimes some dot positions are used in both swaths, also known as overstrike, and sometimes some dot positions are not used at all in order to reduce an amount of ink that is used for rendering the image, but it also occurs that 50% of the dot positions are used in a first swath and 50% are used in a second. If one of the swaths applies more dot positions than the other, the print mode is called unbalanced. As one can readily understand, more-than-two-pass modes, such as a four-pass mode and an eight-pass mode are also applied with proportionally smaller transport step and equally smaller productivity. Thus, a print mode balances print quality and productivity.

The document US 2006/230969 A1 discloses a method of printing an area of a substrate in a plurality of passes using curable ink, the method comprising depositing a first pass of ink on the area, partially curing ink deposited in the first pass, depositing a second pass of ink on the area, and fully curing the ink on the area.

It has been observed, that, in an at least two pass print mode, it is necessary to fix the position of the applied ink dots immediately after a pass has been made either by irradiating the ink in the swath or by sufficiently lowering the temperature of the ink. The level of fixing, that is the amount of radiation or the amount of temperature difference, affects properties of a print such as its gloss and its adhesion to the substrate. However, the print quality is negatively affected by an improper level of fixing. A too high level of fixing, which amounts to a too high level of radiation, or a too large temperature difference between the jetting temperature and the ink temperature at the time of landing on the substrate, causes the ink to insufficiently accommodate further ink in a next pass, whereas a too low level of fixing, which amounts to a too low level of radiation, or a too small temperature difference between the jetting temperature and the ink temperature at the time of landing on the substrate, causes the ink to coalesce on the substrate, thereby deteriorating the print quality. In particular, it has been observed that in printing areas of a uniform color, a non-uniformity in optical density occurs at the boundaries of the swaths.

An object of the present invention is to enhance the latitude of the level of fixing in the print process.

### SUMMARY OF THE INVENTION

In order to achieve the above-mentioned object, the method according to the invention comprises a step of making a level of fixing adjustable and to determine an associated print mode in dependence on the level of fixing.

As noted earlier, a non-uniformity in optical density occurs at the swath boundaries at low fixing levels. Therefore, it would be required to use a minimum fixing level to prevent this effect. It has been found that this effect can be mitigated by selecting an alternative print mode. This alternative print mode, as characterized by a print mask that is applied to a halftoned raster image, applies clusters of pixels in one pass, instead of the usual dispersed pixels. Such a print mask applies the ink in a way that a swath boundary is not dominating the ink distribution and an edge of ink is in an arbitrary direction. Still, if this print mask is used for high levels of fixing, the cluster edges would become visible and would deteriorate the print quality. It is therefore essential that the print mode is coupled to the level of fixing.

In a further embodiment, the ink is positionally fixed by exposing it to radiation that polymerizes a part of a substance of the ink and the level of fixing is adjusted by altering an amount of radiation. For this kind of ink, the radiation used in the pin-curing step is not sufficient to fully cure the ink. Still, the ink is not as fluid as it is inside the print head. A higher amount of radiation on the ink on the substrate means a higher level of fixing and its association with another print mode enhances the latitude of the level of fixing.

In an alternative embodiment, the ink is positionally fixed by reducing its temperature and the level of fixing is adjusted by altering a process temperature of the ink. For this kind of ink, also known as gelling ink, the jetting temperature of the ink is higher than the temperature of the ink on the substrate directly after application. This cooling down increases its viscosity, thereby obtaining a level of fixing. The process temperature may be increased by providing additional heat, e.g. by infrared radiation or other heating means, or by increasing the ambient temperature. Anyway, a higher temperature of the ink on the substrate means a lower level of fixing and its association with another print mode enhances the latitude of the level of fixing.

In a further embodiment, the level of fixing and the associated print mode are determined by selecting an ink receiving medium as the substrate. It has been found that it is convenient to associate a level of fixing with a receiving medium, thus optimizing a print process in dependence on the medium. If it is preferred to use a low level of fixing, e.g. because this enhances the adhesion of the ink to the selected receiving medium, a coupled print mode ensures that a sufficient print quality is obtained.

In a further embodiment, the associated print mode is determined by an amount of clustering of pixels in the related print masks. A print mask may have smaller or larger clusters of pixels to be printed in one of the passes of the multipass print process. A larger cluster is beneficial for uniformity and usually applied at a low level of fixing in order to avoid swath boundary visibility. Thus, the level of fixing is used to determine the cluster size applied in the associated print mode.

In a further embodiment, more than one ink is applied and the print masks for the at least two inks in the print mode applying the largest clusters are correlated. For obtaining a full color print, usually four inks are used that are applied in one and the same pass. The print masks for different inks are usually uncorrelated at high fixing levels, but it has been found beneficial to further enlarge the dot clusters by applying the same, or at least correlated print masks for each ink at low fixing levels.

Further details of the invention are given in the dependent claims. The present invention may also be embodied in an inkjet printer for applying ink to a substrate, the printer comprising a first carriage with at least one print head for applying a curable ink on a substrate and a second carriage with a radiation source for curing the applied ink, the two carriages being reciprocatingly movable in a scanning direction and the substrate being movable relative to the carriages in a sub-scanning direction, the printer further comprising a controller configured to apply the methods as defined above.

In a further embodiment, the first carriage further comprises a radiation source for irradiating the ink applied onto the substrate in an adjustable amount of radiation. The adjustable amount of radiation provides the required level of fixing directly after application of ink in a pass of the print head.

In a further embodiment, a process temperature is adjustable in order to positionally fix the ink by changing its viscosity. The adjustment of the process temperature is preferably obtained by providing a means to vary an amount of additional heat to the ink on the substrate, such as by providing a source of infra-red radiation.

In a further embodiment, a receiving medium is selectable and a level of fixing and a print mode are associated with the receiving medium. For a printer applying a versatile range of receiving substrates, it is convenient to select appropriate print conditions in dependence on the receiving medium.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
Fig. 1 is a print process arrangement wherein the invention is applicable.
Fig. 2 shows the working of a print mask in a two-pass print mode.
Fig. 3 shows a four-pass inking process of a uniform area using dispersed masks.
Fig. 4 shows a four-pass inking process of a uniform area using clustered masks.

### DETAILED DESCRIPTION OF EMBODIMENTS

The present invention will now be described with reference to the accompanying drawings, wherein the same or similar elements are identified with the same reference numeral.

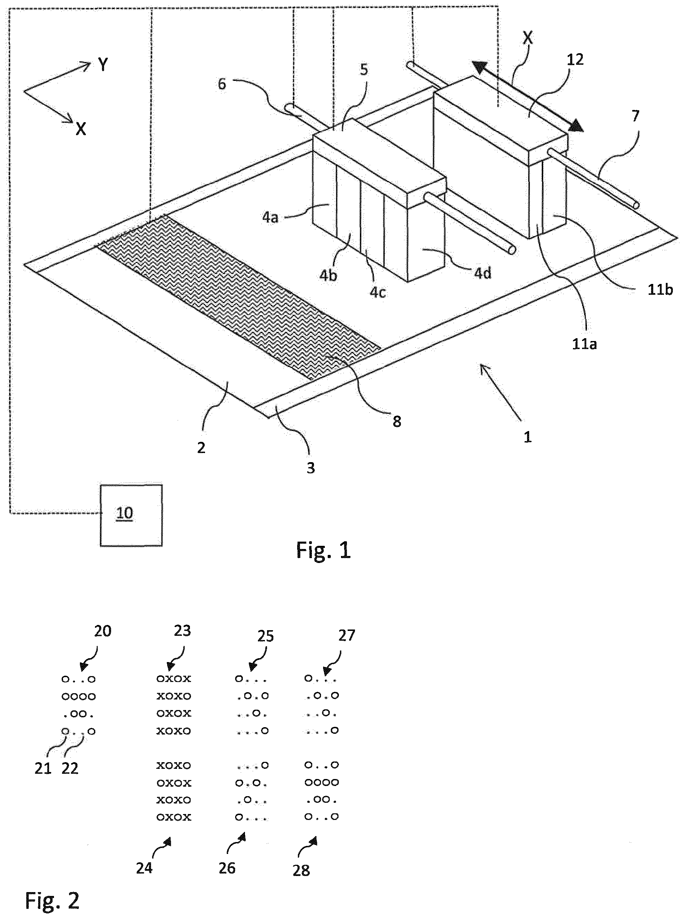

Fig. 1 shows an ink jet printing assembly 1. The ink jet printing assembly 1 comprises supporting means for supporting an image receiving medium 2. The supporting means are shown in Fig. 1 as a flat surface 3, but alternatively, the supporting means may be a platen, for example a rotatable drum that is rotatable around an axis. The supporting means may be optionally provided with suction holes for holding the image receiving medium in a fixed position with respect to the supporting means. The ink jet printing assembly 1 comprises print heads 4a - 4d, mounted on a scanning print carriage 5. The scanning print carriage 5 is guided by suitable guiding means 6 to move in reciprocation in the main scanning direction X. Each print head 4a - 4d comprises an orifice surface, with at least one orifice, oriented towards the medium 2. The print heads 4a - 4d are configured to eject droplets of marking material out of the at least one orifice onto the image receiving medium 2.

The image receiving medium 2 may be a medium in web or in sheet form and may be composed of e.g. paper, cardboard, label stock, coated paper, plastic or textile. Alternatively, the image receiving medium 2 may also be an intermediate member, endless or not. Examples of endless members, which may be moved cyclically, are a belt or a drum. The image receiving medium 2 is moved in the sub-scanning direction Y over the flat surface 1 along four print heads 4a - 4d provided with a fluid marking material, also known as ink.

The image receiving medium 2, as depicted in Fig. 1 is locally heated or cooled in the temperature control region 8. In this region, temperature control means (not shown), such as heating and/or cooling means may be provided to control the temperature of the receiving medium 2. Optionally, the temperature control means may be integrated in the supporting means for supporting an image receiving medium 2. The temperature control means may be electrical temperature control means. The temperature control means may use a cooling and/or heating liquid to control the temperature of the image receiving medium 2. The temperature control means may further comprise a sensor (not shown) for monitoring the temperature of the image receiving medium 2. The temperature is adjusted using a set-point that is adjustable through a user interface (not shown).

A scanning print carriage 5 carries the four print heads 4a - 4d and may be moved in reciprocation in the main scanning direction X parallel to the platen 3, such as to enable scanning of the image receiving medium 2 in the main scanning direction X. Only four print heads 4a - 4d are depicted for demonstrating the invention. In practice an arbitrary number of print heads may be employed. In any case, at least one print head 4a - 4d per color of marking material is placed on the scanning print carriage 5. For example, for a black-and-white printer, at least one print head 4a - 4d, usually containing black marking material is present. For a full-color printer at least one print head 4a - 4d for each of the color inks, usually black, cyan, magenta and yellow ink is present. Often, in a full-color printer, black marking material is used more frequently in comparison to differently colored marking material. Therefore, more print heads 4a - 4d containing black marking material may be provided on the scanning print carriage 5 compared to print heads 4a - 4d containing marking material in any of the other colors. Alternatively, the print head 4a - 4d containing black marking material may be larger than any of the print heads 4a - 4d, containing a differently colored marking material.

The carriage 5 is guided by guiding means 6. These guiding means 6 may be a rod as depicted in Fig. 1. Although only one rod 6 is depicted in Fig. 1, a plurality of rods may be used to guide the carriage 5 carrying the print heads 4a - 4d. The rod may be driven by suitable driving means (not shown). Alternatively, the carriage 5 may be guided by other guiding means, such as an arm being able to move the carriage 5. Another alternative is to move the image receiving material 2 in the main scanning direction X.

Each print head 4a - 4d comprises an orifice surface at the bottom side having at least one orifice, in fluid communication with a pressure chamber containing fluid marking material provided in the print head 4a - 4d. On the orifice surface a number of orifices are arranged in a single linear array parallel to the sub-scanning direction Y. In a practical embodiment several hundreds of orifices are provided per print head 4a - 4d, optionally arranged in multiple arrays. As depicted in Fig. 1, the respective print heads 4a - 4d are placed parallel to each other. The print heads 4a - 4d may be placed such that corresponding orifices of the respective print heads are positioned in-line in the main scanning direction X. This parallel positioning of the print heads 4a - 4d with corresponding in-line placement of the orifices is advantageous to increase productivity and/or improve print quality. Alternatively multiple print heads 4a - 4d may be placed on the print carriage adjacent to each other such that the orifices of the respective print heads 4a - 4d are positioned in a staggered configuration instead of in-line. For instance, this may be done to increase the print resolution or to enlarge the effective print area, which may be addressed in a single scan in the main scanning direction X. The image dots are formed by ejecting droplets of marking material from the orifices.

The ink jet printing assembly 1 may further comprise curing means 11a and 11b. As shown in Fig. 1, a scanning print carriage 12 carries the two curing means 11a, 11b and may be moved in reciprocation in the main scanning direction X parallel to the platen 3, such as to enable scanning of the image receiving medium 2 in the main scanning direction X. Alternatively, more than two curing means may be applied. The first curing means 11a may emit a first beam of UV radiation, the first beam having a first intensity. The first curing means 11a may be configured to provide the radiation for a first curing step. The second curing means 11b may emit a second beam of radiation, the second beam of radiation having a second intensity. The second curing means 11b may be configured to provide the radiation for a second curing step. Thus it may be assured that no uncured marking material is left on the receiving medium 2.

The carriage 12 is guided by guiding means 7. These guiding means 7 may be a rod as depicted in Fig. 1. Although only one rod 7 is depicted in Fig. 1, a plurality of rods may be used to guide the carriage 12 carrying the curing means. The rod 7 may be driven by suitable driving means (not shown). Alternatively, the carriage 12 may be guided by other guiding means, such as an arm being able to move the carriage 12.

The curing means may be energy sources, such as actinic radiation sources, accelerated particle sources or heaters. Examples of actinic radiation sources are UV radiation sources or visible light sources. UV radiation sources are preferred, because they are particularly suited to cure UV curable inks by inducing a polymerization reaction in such inks. Examples of suitable sources of such radiation are lamps, such as mercury lamps, xenon lamps, carbon arc lamps, tungsten filaments lamps, light emitting diodes (LED's) and lasers. In the embodiment shown in Fig. 1, the first curing means 11a and the second curing means 11b are positioned parallel to one another in the sub scanning direction Y. The first curing means 11a and the second curing means 11b may be the same type of energy source or may be different type of energy source. For example, when the first and second curing means 11a, 11b, respectively both emit actinic radiation, the wavelength of the radiated emitted by the two respective curing means 11a, 11b may differ or may be the same. The first and second curing means are depicted as distinct devices. However, alternatively, only one source of UV radiation emitting a spectrum of radiation may be used, together with at least two distinct filters. Each filter may absorb a part of the spectrum, thereby providing two beams of radiation, each one having intensity different from the other.

The flat surface 3, the temperature control means, the carriage 5, the print heads 4a - 4d, the carriage 12 and the first and second curing means 11a, 11b are controlled by suitable controlling means 10.

In the ink jet printing assembly 1 gelling marking material is applied in correspondence with image data as processed by controlling means 10. This marking material is jetted from the print heads 4a - 4d at elevated temperatures and cools down after application on the receiving medium 2. The temperature of the temperature control region 8 determines the process temperature of the ink. Similarly a heat source may be attached to the carriage 5 to influence the process temperature of the applied ink.

Fig. 2 shows the effect of a print mask for image data in a two-pass print mode. Image data 20, comprising a raster image of 4x4 pixels with dots 21 and no-dots 22, is process in a first step by mask 23. This mask indicates which dot positions are applied (o) and which dot positions are blocked (x). Thus, in a first pass, only the dots as indicated in raster image 25 are applied by the corresponding print element in print head 4a - 4d and the partially printed image looks like raster image 27. In a second pass, the dots as in raster image 26 are applied, resulting in raster image 28. In this case, the print masks 23 and 24 are each other's complement, by which every dot in raster image 20 is printed exactly once. A dot may also be printed in both passes, which is known as overstrike, in order to intensify the printed image. On the other hand, there may be print positions excluded from ink application to reduce the amount of ink applied for the image. These positions would have to be blocked in each print mask 23, 24.

A further print mode that is known is interlaced printing. In this mode, half of the rows of pixels in the image is not printed at all in one of the passes of the print heads. This may be due to a lower resolution of the nozzles in the print head than pixels in the image and print positions defined on the receiving medium. In a further pass, the other half of the rows is not printed.

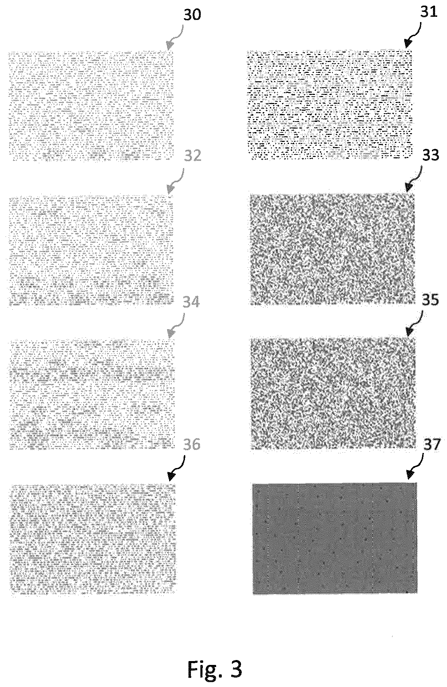

In Fig. 3 a four-pass interlaced print mode as applied by ink jet printing assembly 1 is shown for a uniform area of dots in a raster of about 150 x 100 pixels, as generated by a halftone image processing unit. In a first pass, ink dots as shown in image 30 are printed, resulting in partially printed image 31. In a second pass, ink dots as shown in image 32 are printed, resulting in partially printed image 33. Note that every row of pixels now comprises ink dots. In a third pass, ink dots as shown in image 34 are printed, resulting in partially printed image 35. In a fourth pass, ink dots as shown in image 36 are printed, resulting in printed image 37. This is the usual way of printing. The dark points in mage 37 indicate overstrike print positions. It has been observed that for high ink process temperatures, this method of printing yields visible inhomogeneities at swath boundaries.

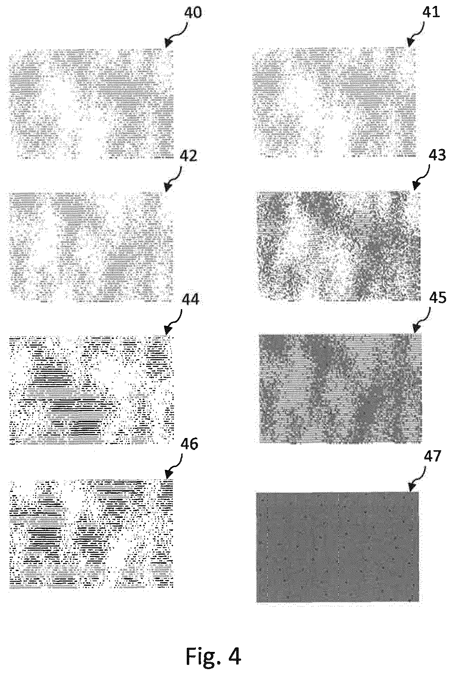

Therefore, a further print mode is part of the control system 10 in ink jet printing assembly 1. This further print mode is indicated by a series of images in Fig. 4. In this four-pass print mode a clustering of pixels in the print mask is applied in order to create inner boundaries of ink within the swath. Similar to Fig. 3, image 40 and 41 show how the ink is distributed after a first pass, image 42 shows how the ink is applied in a second pass, resulting in a distribution 43, image 44 shows how the ink is applied in a third pass, resulting in a distribution 45, and image 46 shows how the ink is applied in a fourth pass, resulting in a final ink distribution 47. The final distribution is the same as in 37 (Fig. 3). This print mode is only applicable for low fixing levels, which is in this case high temperatures. If the process temperature is too low, the clusters will be visible in the final ink distribution.

For low fixing levels in the multi-color ink-jet print assembly 1, the image data for the various color marking materials are processed using the same print masks. Thus, the masks are correlated. This is in contrast with the use of print masks as in Fig. 3, wherein a different print mask for each color ink is used, each print mask being uncorrelated to another print mask.

The invention being thus described, it will be obvious that the same may be varied in many ways.

## Claims

1. A method for controlling an inkjet printer (1), which comprises a reciprocating print head (4a, 4b, 4c, 4d) that applies a curable ink on a substrate (2) in an at least two-pass print process, wherein a print mask is applied to determine which dot positions are addressed in a pass of the print head, the ink being positionally fixed in a fixing step directly after application and cured in a curing step on a part of the substrate where the application of ink is completed, and wherein a level of fixing is adjustable, **characterised in that** an amount of clustering of pixels in the print mask related to a print mode, associated with the level of fixing, is varied in dependence on the level of fixing.

2. The method according to claim 1, wherein the ink is positionally fixed by exposing it to radiation that polymerizes a part of a substance of the ink and the level of fixing is adjusted by altering an amount of radiation.

3. The method according to claim 1, wherein the ink is positionally fixed by reducing its temperature and the level of fixing is adjusted by altering a process temperature of the ink.

4. The method according to claim 1, wherein the level of fixing and the associated print mode are determined by selecting an ink receiving medium as the substrate.

5. The method according to claim 1, wherein more than one ink is applied and the print masks for the at least two inks in the print mode applying the largest clusters are at least partially correlated.

6. An inkjet printer (1) for applying ink to a substrate (2), the printer comprising a first carriage (5) with at least one print head (4a, 4b, 4c, 4d) for applying a curable ink on the substrate and a second carriage (12) with a radiation source (11a, 11b) for curing the applied ink, the two carriages being reciprocatingly movable in a scanning direction and the substrate being movable relative to the carriages in a sub-scanning direction, the printer further comprising a controller configured to apply the method according to claim 1.

7. The inkjet printer according to claim 6, wherein the first carriage further comprises a radiation source for irradiating the ink applied onto the substrate in an adjustable amount of radiation.

8. The inkjet printer according to claim 6, wherein a process temperature is adjustable in order to positionally fix the ink by changing its viscosity.

9. The inkjet printer according to claim 6, wherein a receiving medium is selectable and a level of fixing and a print mode are associated with the receiving medium.

## Patentansprüche

1. Ein Verfahren zur Steuerung eines Tintenstrahldruckers (1), der einen hin- und herlaufenden Druckkopf (4a, 4b, 4c, 4d) aufweist, der in einem Druckprozess mit mindestens zwei Durchgängen eine aushärtbare Tinte auf ein Substrat (2) aufbringt,
wobei eine Druckmaske angewandt wird, um zu entscheiden, welche Punktpositionen in einem Durchgang des Druckkopfes adressiert werden, wobei die Tinte in einem Fixierschritt unmittelbar nach der Aufbringung in ihrer Position fixiert und in einem Aushärtungsschritt auf einem Teil des Substrats ausgehärtet wird, auf dem die Aufbringung der Tinte abgeschlossen ist, und wobei das Ausmaß der Fixierung einstellbar ist, **dadurch gekennzeichnet, dass**
ein auf einen Druckmodus bezogenes Ausmaß der Clusterbildung von Pixeln in der Druckmaske, das mit dem Ausmaß der Fixierung zusammenhängt, in Abhängigkeit vom Ausmaß der Fixierung variiert wird.

2. Das Verfahren nach Anspruch 1, bei dem die Tinte in ihrer Position fixiert wird, indem sie einer Strahlung ausgesetzt wird, die einen Teil einer Substanz in der Tinte polymerisiert, und das Ausmaß der Fixierung eingestellt wird durch Ändern einer Menge der Bestrahlung.

3. Das Verfahren nach Anspruch 1, bei dem die Tinte in ihrer Position fixiert wird, indem ihre Temperatur verringert wird, und das Ausmaß der Fixierung eingestellt wird durch Ändern einer Prozesstemperatur der Tinte.

4. Das Verfahren nach Anspruch 1, bei dem das Ausmaß der Fixierung und der zugehörige Druckmodus bestimmt werden durch Auswahl eines Tintenempfangsmediums als das Substrat.

5. Das Verfahren nach Anspruch 1, bei dem mehr als eine Tinte aufgebracht wird und die Druckmasken für die wenigstens zwei Tinten in dem Druckmodus, der die größten Cluster bildet, zumindest zum Teil korreliert sind.

6. Ein Tintenstrahldrucker (1) zum Aufbringen von Tinte auf ein Substrat (2), wobei der Drucker einen ersten Wagen (5) mit mindestens einem Druckkopf (4a, 4b, 4c, 4d) zum Aufbringen einer aushärtbaren Tinte auf das Substrat und einen zweiten Wagen (12) mit einer Strahlungsquelle (11a, 11b) zum Aushärten der aufgebrachten Tinte aufweist, wobei die beiden Wagen in einer Abtastrichtung hin und her bewegbar sind und das Substrat relativ zu den Wagen in einer Unterabtastrichtung bewegbar ist, wobei der Drucker weiterhin eine Steuereinrichtung aufweist, die dazu konfiguriert ist, das Verfahren nach Anspruch 1 auszuführen.

7. Der Tintenstrahldrucker nach Anspruch 6, bei dem der erste Wagen weiterhin eine Strahlungsquelle zum Bestrahlen der auf das Substrat aufgebrachten Tinte mit einer einstellbaren Strahlungsmenge aufweist.

8. Der Tintenstrahldrucker nach Anspruch 6, bei dem eine Prozesstemperatur einstellbar ist, um die Tinte durch Änderung ihrer Viskosität in ihrer Position zu fixieren.

9. Der Tintenstrahldrucker nach Anspruch 6, bei dem ein Empfangsmedium auswählbar ist und ein Ausmaß der Fixierung und ein Druckmodus mit dem Empfangsmedium verknüpft sind.

## Revendications

1. Procédé de commande d'une imprimante à jet d'encre (1), qui comprend une tête d'impression à mouvement alternatif (4a, 4b, 4c, 4d) qui applique une encre durcissable sur un substrat (2) dans un processus d'impression en au moins deux passages,
dans lequel un masque d'impression est appliqué pour déterminer quelles positions de point sont traitées dans un passage de la tête d'impression, l'encre étant fixée en position dans une étape de fixation directement après application et durcie dans une étape de durcissement sur une partie du substrat où l'application d'encre est achevée, et dans lequel
un niveau de fixation est ajustable, **caractérisé en ce que**
une quantité de regroupement de pixels dans le masque d'impression lié à un mode d'impression, associé au niveau de fixation, est variée selon le niveau de fixation.

2. Procédé selon la revendication 1, dans lequel l'encre est fixée en position par son exposition au rayonnement qui polymérise une partie d'une substance de l'encre et le niveau de fixation est ajusté par modification d'une quantité de rayonnement.

3. Procédé selon la revendication 1, dans lequel l'encre est fixée en position par réduction de sa température et le niveau de fixation est ajusté par modification d'une température de processus de l'encre.

4. Procédé selon la revendication 1, dans lequel le niveau de fixation et le mode d'impression associé sont déterminés par sélection d'un support de réception d'encre comme substrat.

5. Procédé selon la revendication 1, dans lequel plus d'une encre est appliquée et les masques d'impression pour les au moins deux encres dans le mode d'impression appliquant les regroupements les plus grands sont au moins partiellement corrélés.

6. Imprimante à jet d'encre (1) pour l'application d'encre à un substrat (2), l'imprimante comprenant un premier chariot (5) avec au moins une tête d'impression (4a, 4b, 4c, 4d) pour l'application d'une encre durcissable sur le substrat et un second chariot (12) avec une source de rayonnement (11a, 11b) pour le durcissement de l'encre appliquée, les deux chariots étant mobiles alternativement dans une direction de balayage et le substrat étant mobile par rapport aux chariots dans une direction de sousbalayage, l'imprimante comprenant en outre un dispositif de commande configuré pour appliquer le procédé selon la revendication 1.

7. Procédé selon la revendication 6, dans lequel le premier chariot comprend en outre une source de rayonnement pour l'irradiation de l'encre appliquée sur le substrat dans une quantité ajustable de rayonnement.

8. Procédé selon la revendication 6, dans lequel une température de processus est ajustable afin de fixer en position l'encre par changement de sa viscosité.

9. Procédé selon la revendication 6, dans lequel un support de réception est sélectionnable et un niveau de fixation et un mode d'impression sont associés au support de réception.
